# EUROPÄISCHE PATENTSCHRIFT

(11) **EP 1 095 225 B1**
(45) Veröffentlichungstag und Bekanntmachung des Hinweises auf die Patenterteilung: **22.05.2002**
(21) Anmeldenummer: 99926217.3
(22) Anmeldetag: 29.06.1999
(51) Int. Cl.: F16L 37/092

(54) **SCHUBGESICHERTE STECKMUFFENVERBINDUNG**
LOCKED SOCKET JOINT
EMBOITEMENT AUTO-ETANCHE AVEC GARNITURE POUR VERROUILLAGE

(30) Priorität: 09.07.1998 CH 148598
(43) Veröffentlichungstag der Anmeldung: 02.05.2001
(73) Patentinhaber: Von Roll Holding AG, 4563 Gerlafingen (CH)
(72) Erfinder: SCHMASSMANN, Christian, CH-2827 Mervelier (CH); HOLZHERR, Pierre, CH-2830 Vellerat (CH)
(74) Vertreter: Bollhalder, Renato
(86) Internationale Anmeldenummer: CH9900279
(87) Internationale Veröffentlichungsnummer: WO0003171

(56) Entgegenhaltungen:
- EP-A- 0 541 472
- DE-A- 2 754 984
- DE-U- 29 622 772
- US-A- 5 197 768

## Beschreibung

Die vorliegende Erfindung bezieht sich auf eine Steckmuffenverbindung mit zwei Rohrleitungselementen, wie sie im Oberbegriff des unabhängigen Patentanspruchs 1 definiert ist.

Die Steckmuffenverbindung, bei der das Spitzende des einen Rohrleitungselements in die Muffe des anderen Rohrleitungselements eingesteckt wird, ist eine bekannte und weit verbreitete Verbindungsart für Rohrleitungselemente, die vor allem bei gegossenen Druckrohren, Formstücken und Armaturen verwendet wird und sich auch bei schwierigen Betriebsbedingungen bewährt hat. Die Abdichtung zwischen Muffe und Spitzende erfolgt normalerweise mittels eines dazwischen angeordneten Dichtrings. Um in axialer Richtung wirkende Kräfte zwischen Muffe und Spitzende aufnehmen zu können, müssen zusätzliche Verriegelungsmittel vorgesehen sein.

Beispielsweise aus der EP-B-0 526 373 ist es bekannt, innerhalb des grundsätzlich elastischen Dichtrings der Steckmuffenverbindung eine Vielzahl von in Umfangsrichtung mit gegenseitigem Abstand angeordneten, starren Halteelementen mit nach innen gerichteten Zähnen vorzusehen, die beim Einstecken des Spitzendes in die Muffe durch die Aussenfläche des Spitzendes unter Komprimierung des elastischen Dichtringkörpers nach aussen gedreht werden. Der komprimierte elastische Dichtringkörper sorgt dafür, dass die Zähne ständig an der Aussenfläche des Spitzendes anliegen. Nachdem das Spitzende vollständig in die Muffe eingeführt ist und die Rohrleitungselemente unter Druck gesetzt werden, können axiale Kräfte auftreten, die die Tendenz haben, das Spitzende aus der Muffe zu bewegen. Diese Bewegung wird durch die starren Halteelemente verhindert, die einerseits an der Muffe und anderseits am Spitzende anliegen.

Derartige Steckmuffenverbindungen mit einem Dichtring mit integrierten Halteelementen weisen den Nachteil auf, dass die Verriegelungsmittel und die Dichtmittel nicht separat montierbar und ersetzbar sind. Ausserdem ist der die Halteelemente gegen das Spitzende drückende elastische Dichtringkörper ständig in Kontakt mit dem Spitzende, was auch geringe Auslenkungen des Spitzendes gegenüber der Muffe problematisch macht, da die Reibung relativ gross ist und das elastische Material während des Auslenkens gleichzeitig teilweise auseinandergezogen und teilweise komprimiert wird und die Gefahr besteht, dass die Zähne der Halteelemente den elastischen Dichtringkörper beeinträchtigen oder zerstören. Dies hat unter anderem eine-Erschwerung der Montage der Rohrleitungselemente zur Folge. Ein weiterer Nachteil besteht darin, dass beim Einstecken des Spitzendes in die Muffe die Zähne der Halteelemente in das Spitzende Schlitze ritzen, durch die bei einer kleinen Rückverschiebung des Spitzendes, z.B. durch Dilatation, Wasser austreten kann. Eine vollständige Dichtigkeit ist daher nicht mehr gewährleistet.

Ein Beispiel einer Steckmuffenverbindung mit vom Dichtring getrennt ausgebildetem Haltering mit einer Vielzahl von in Umfangsrichtung mit gegenseitigem Abstand angeordneten, starren Halteelementen mit nach innen gerichteten Zähnen ist in der EP-B-0 235 818 beschrieben. Die Halteelemente weisen eine ballig ausgebildete äussere Mantelfläche auf, die bei Auftreten von axialen Kräften mit einer sich konisch zum Ende verjüngenden Innenfläche der Muffe zusammenwirken und die Zähne gegen das Spitzende drücken. Durch ein am Haltering angeformtes, am Muffenstirnende festlegbares Halteteil aus Elastomer soll verhindert werden, dass der Haltering beim Einstecken des Spitzendes in die Muffe mitgezogen wird und beim Auftreten von axialen Kräften zusammen mit dem Spitzende zuerst wieder bis zur konischen Innenfläche zurückbewegt werden muss, ehe diese die Zähne der Halteelemente in das Spitzende drückt und dieses verriegelt. Da aber eine gewisse axiale Verschiebung der Halteelemente in der Muffe zur Ermöglichung des Einsteckens des Spitzendes notwendig ist und die Zähne erst nach dem Auftreten von axialen Kräften. in das Spitzende gedrückt werden, wirkt die Verriegelung auch hier erst verzögert.

Ein anderes Beispiel eines separaten Halterings ist der Schubsicherungsring TKF-Z der Firma Thyssen Guss AG, Gelsenkirchen/DE, dessen Halteelemente einerseits an der konischen Innenfläche der Muffe anliegen und anderseits zwischen Muffe und Spitzende durch einen dünnen Lippenring in der gewünschten Position gehalten werden. Auch bei einer Steckmuffenverbindung mit einem solchen Haltering werden die Zähne erst nach dem Auftreten von axialen Kräften in das Spitzende gedrückt, wodurch die Verriegelung verzögert wirkt.

Eine ähnliche Steckmuffenverbindung mit separatem Haltering ist in der DE-U-296 22 772 offenbart. Dessen Halteelemente weisen eine mit Zähnen versehene, dem Spitzende zugewandte Haltefläche auf, die sowohl vor als-auch nach dem Einstecken des Spitzendes in die Muffe parallel zum Spitzende ausgerichtet ist. Beim Einstecken des Spitzendes in die Muffe werden die Halteelemente einerseits axial und anderseits senkrecht zur Achse verschoben, ohne gedreht zu werden. Wiederum werden die Zähne erst nach dem Auftreten von axialen Kräften in Gegenrichtung in das Spitzende gedrückt.

Angesichts der Nachteile der bisher bekannten, oben beschriebenen Steckmuffenverbindungen liegt der Erfindung die folgende Aufgabe zugrunde. Zu schaffen ist eine Steckmuffenverbindung der eingangs erwähnten Art, die eine einfache Montage der Rohrleitungselemente ermöglicht und bei der die Verriegelung des Spitzendes in der Muffe möglichst unmittelbar wirkt, ohne dass dabei die Gefahr der Zerstörung der Dichtung und des Dichtigkeitsverlustes besteht.

Diese Aufgabe wird durch die erfindungsgemässe Steckmuffenverbindung gelöst, wie sie im unabhängigen Patentanspruch 1 definiert ist. Patentanspruch 13 bezieht sich auf einen Haltering für eine solche Steckmuffenverbindung. Bevorzugte Ausführungsvarianten ergeben sich aus den abhängigen Patentansprüchen.

Das Wesen der Erfindung besteht darin, dass bei einer Steckmuffenverbindung mit zwei Rohrleitungselementen, von denen das eine ein Spitzende und das andere ein Ende mit einer Muffe aufweist und das Spitzende des einen Rohrleitungselements in die Muffe des anderen Rohrleitungselements eingesteckt ist, wobei in der Muffe ein Dichtring und ein von diesem getrennt ausgebildeter Haltering angeordnet sind, der eine Vielzahl von in Umfangsrichtung mit gegenseitigem Abstand angeordneten Halteelementen aufweist; die Halteelemente in der Muffe drehbar angeordnet sind und der Haltering im weiteren einen wesentlich komprimierten elastischen Ring aufweist, der auf die Halteelemente eine Drehkraft ausübt, die die dem Spitzende zugewandte Seite der Halteelemente permanent gegen das Spitzende drückt.

Dank der drehbaren Anordnung der Halteelemente und deren permanentem Andrücken an das Spitzende mittels des komprimierten elastischen Rings wird ein Rückwärtsbewegen des Spitzendes zu jedem Zeitpunkt verhindert. Ausserdem ist für Spitzenden verschiedenen Durchmessers derselbe Haltering verwendbar. Da der Haltering vom Dichtring getrennt ausgebildet ist, können beide separat montiert oder ersetzt werden. Im weiteren besteht nicht die Gefahr, dass der Dichtring durch die Halteelemente beeinträchtigt oder zerstört wird, und ein Auslenken des Spitzendes in der Muffe ist einfacher möglich, da keine elastischen Teile mit Doppelfunktionen benötigt werden. Durch allfällige Zähne der Halteelemente in das Spitzende geritzte Schlitze führen bei einer kleinen Rückverschiebung des Spitzendes nicht zu Wasseraustritt, da der Dichtring in der Muffe räumlich deplaziert angeordnet ist. Ein weiterer Vorteil der erfindungsgemässen Steckmuffenverbindung besteht darin, dass die Muffe nicht mit einer sich konisch zum Ende verjüngenden Innenfläche versehen sein muss. Dadurch kann die Steckmuffenverbindung kurz gehalten werden.

Bei einer vorteilhaften Ausführungsvariante der erfindungsgemässen Steckmuffenverbindung ist der Haltering kein geschlossener Ring, sondern an einer Stelle unterbrochen, wobei der elastische Ring aus einem Längsprofil gebildet sein kann. Ein derartiger, offener Haltering kann einfacher in der Muffe plaziert werden.

Im folgenden wird die erfindungsgemässe Steckmuffenverbindung unter Bezugnahme auf die beigefügten Zeichnungen anhand von zwei Ausführungsbeispielen detaillierter beschrieben. Es zeigen:
- Fig. 1 -: einen Längsschnitt durch ein erstes Ausführungsbeispiel einer erfindungsgemässen Steckmuffenverbindung mit Halteelementen mit Zähnen;
- Fig. 2 -: eine Ansicht von vorne des Halterings der Steckmuffenverbindung von Fig. 1;
- Fig. 3 -: einen Schnitt durch den Haltering von Fig. 2 gemäss der Linie A-A;
- Fig. 4 -: die Steckmuffenverbindung von Fig. 1 während des Einsteckens des Spitzendes in die Muffe;
- Fig. 5 -: einen Längsschnitt durch ein zweites Ausführungsbeispiel einer erfindungsgemässen Steckmuffenverbindung mit einem Spitzende mit einer Schweissraupe;
- Fig. 6 -: eine Ansicht von vorne des Halterings der Steckmuffenverbindung von Fig. 5; und
- Fig. 7 -: einen Schnitt durch den Haltering von Fig. 6.

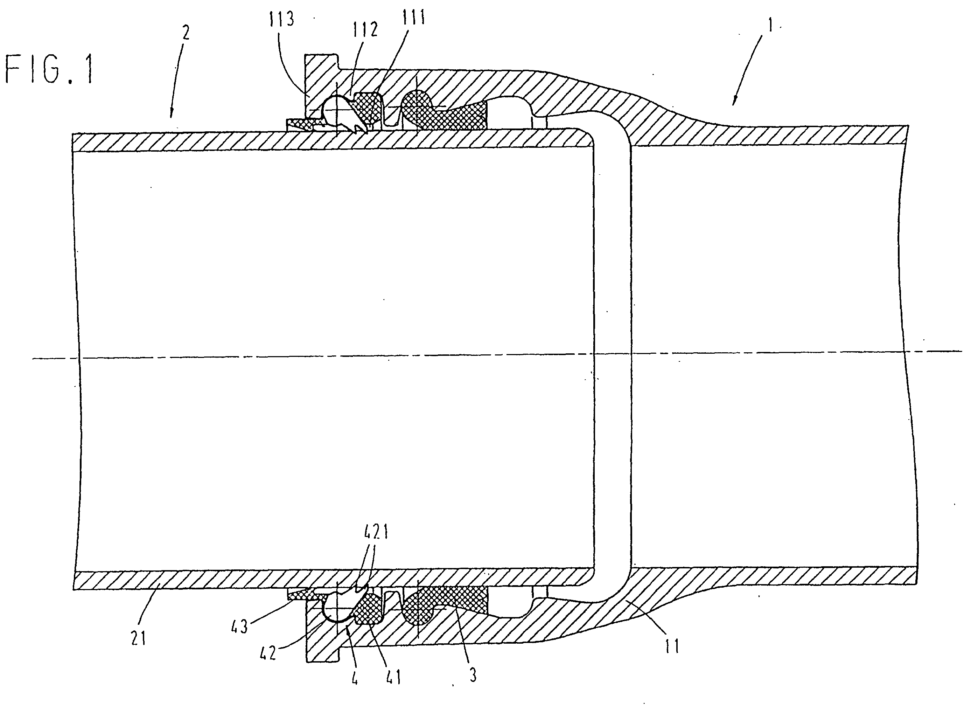

### Erstes Ausführungsbeispiel - Figuren 1 bis 4

Bei der dargestellten Steckmuffenverbindung weist ein Rohrleitungselement 1 eine Muffe 11 und ein Rohrleitungselement 2 ein Spitzende 21 auf. Das Spitzende 21 ist in die Muffe 11 eingesteckt, wobei dazwischen ein Dichtring 3 und ein Haltering 4 in Innennuten der Muffe 11 angeordnet sind. Die Innenseite der Muffe 11 ist im Hinblick auf eine zuverlässige Lagerung des Dichtrings 3, der den Spalt zwischen Spitzende 21 und Muffe 11 abdichtet, mit einem Profil versehen. Der Haltering 4 umfasst einen elastischen Ring 41, zwölf über den Umfang verteilt im elastischen Ring 41 angeordnete, starre Halteelemente 42 mit je zwei Zähnen 421 und einen Dichtungslippenring 43. Der elastische Ring 41, der Dichtungslippenring 43 und der Dichtring 3 sind beispielsweise aus Gummi, während die Halteelemente 42 z.B. aus Metall, insbesondere rostfreiem Stahl, sind.

Zur Lagerung des Halterings 4 ist die Muffe 11 mit einer Halteringinnennut 111 versehen, die durch eine Ringwulst 112 unterteilt ist. Die Ringwulst 112 und die Muffenstirnwand 113 begrenzen eine Ringnut mit ungefähr halbkreisförmigem Querschnitt, in der die Halteelemente 42, deren der Muffe 11 zugewandte Seite ungefähr halbzylinderförmig ausgebildet ist, drehbar gelagert sind. Die Halteelemente 42 sind auf diese Weise während der Drehung geführt. Der Haltering 4 ist derart ausgebildet und gelagert, dass der elastische Ring 41 mit dem Spitzende 21 nicht in Kontakt kommt. Dadurch kann das Spitzende 21 in der Muffe 11 problemlos um 4° oder mehr gedreht werden, was die Montage der Rohrleitungselemente 1, 2 erleichtert.

Der Dichtungslippenring 43 ist mit dem elastischen Ring 41 einstückig ausgebildet und verhindert, dass Schmutz in den Spalt zwischen Spitzende 21 und Muffe 11 gelangt. Gleichzeitig zeigt er auch an, dass die Steckmuffenverbindung mit einem Haltering 4 versehen ist.

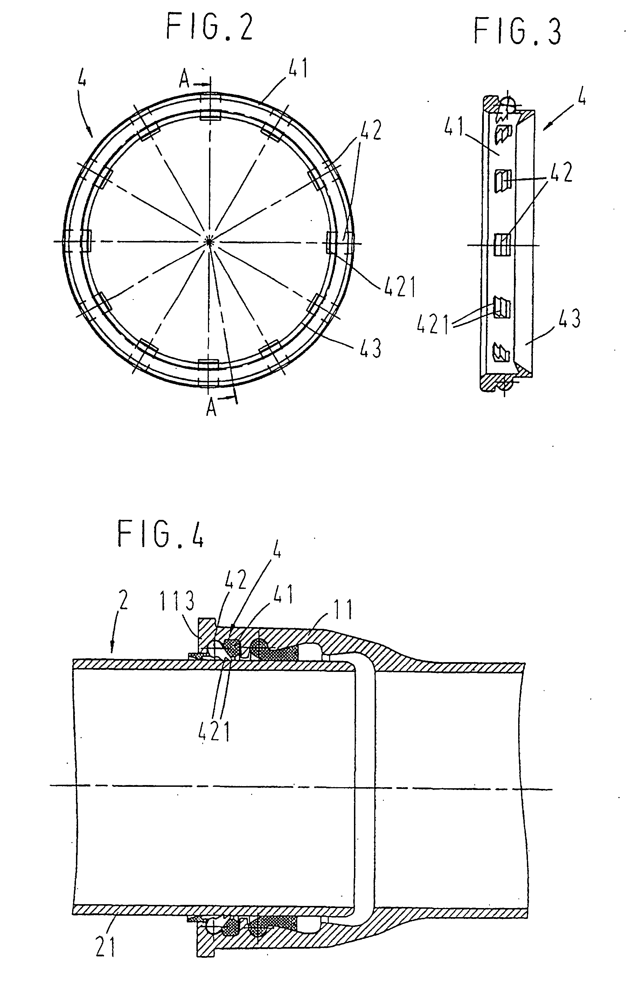

Aus Fig. 4 ist ersichtlich, dass beim Einführen des Spitzendes 21 in die Muffe 11 die Aussenfläche des Spitzendes 21 die Zähne 421 der Halteelemente 42 nach aussen drückt und so die Halteelemente 42 dreht. Der elastische Ring 41 wird dadurch komprimiert und übt in der Folge auf die Halteelemente 42 eine Drehkraft aus, die die Zähne 421 der Halteelemente 42 permanent gegen das Spitzende 21 drückt. Die auf jedes Halteelement 42 ausgeübte Drehkraft beträgt vorzugsweise mehr als 400 N, wobei diese natürlich unter anderem vom Material des elastischen Rings 41 und den geometrischen Verhältnissen abhängt. Die drehbare Anordnung der Halteelemente 42 ermöglicht es, denselben Haltering 4 für Spitzenden 21 verschiedenen Durchmessers zu verwenden.

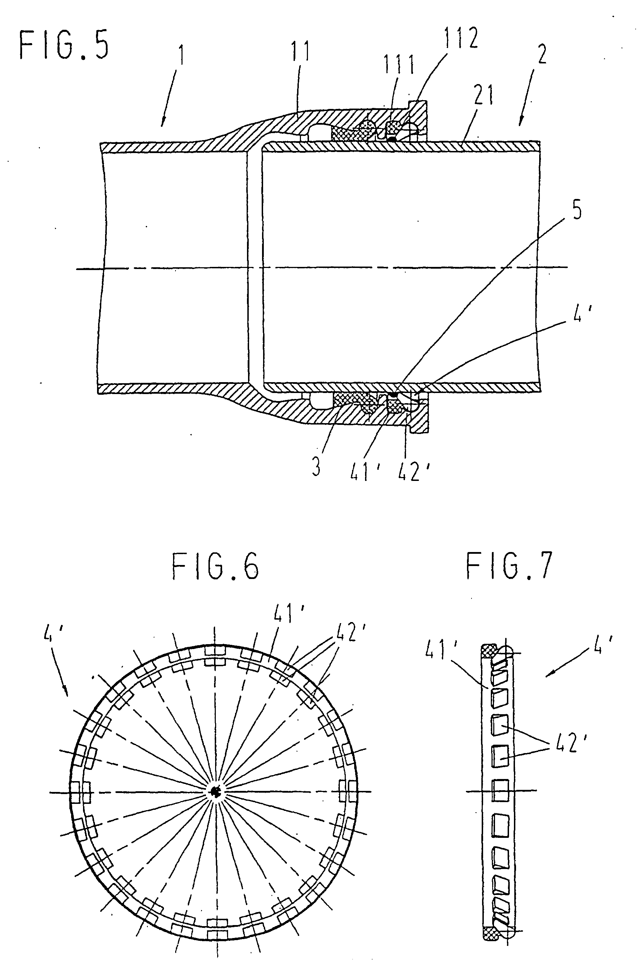

### Zweites Ausführungsbeispiel - Figuren 5 bis 7

Diese Steckmuffenverbindung unterscheidet sich vom ersten Ausführungsbeispiel im wesentlichen dadurch, dass auf dem Spitzende 21 des Rohrleitungselements 2 um den ganzen Umfang herum eine Schweissraupe 5 angebracht ist. Dadurch kann bei den Halteelementen 42' des Halterings 4' auf Zähne verzichtet werden. Der elastische Ring 41' entspricht prinzipiell dem elastischen Ring 41 des ersten Ausführungsbeispiels, in ihm sind aber vierundzwanzig und nicht nur zwölf Halteelemente 42' angeordnet. Auf einen Dichtungslippenring ist hier verzichtet worden. Der Rest ist analog zum ersten Ausführungsbeispiel.

Zu den vorbeschriebenen erfindungsgemässen Steckmuffenverbindungen sind weitere konstruktive Variationen realisierbar. Hier ausdrücklich erwähnt seien noch:
- Der erfindungsgemässe Haltering 4 kann auch mit Dichtringen anderer, hier nicht dargestellter Art problemlos kombiniert werden.
- Der Haltering muss nicht unbedingt ein geschlossener Ring sein, sondern kann auch an einer Stelle unterbrochen sein. Dies ermöglicht ein einfacheres Einsetzen des Ringes in die Muffe.

## Patentansprüche

1. Steckmuffenverbindung mit zwei Rohrleitungselementen (1, 2), von denen das eine ein Spitzende (21) und das andere ein Ende mit einer Muffe (11) aufweist und das Spitzende (21) des einen Rohrleitungselements (2) in die Muffe (11) des anderen Rohrleitungselements (1) eingesteckt ist, wobei in der Muffe (11) ein Dichtring (3) und ein von diesem getrennt ausgebildeter Haltering (4; 4') angeordnet sind, der eine Vielzahl von in Umfangsrichtung mit gegenseitigem Abstand angeordneten Halteelementen (42; 42') aufweist, **dadurch gekennzeichnet, dass** die Halteelemente (42; 42') in der Muffe (11) drehbar angeordnet sind und der Haltering (4; 4') im weiteren einen wesentlich komprimierten elastischen Ring (41; 41') aufweist, der auf die Halteelemente (42; 42') eine Drehkraft ausübt, die die dem Spitzende (21) zugewandte Seite der Halteelemente (42; 42') permanent gegen das Spitzende (21) drückt.

2. Steckmuffenverbindung nach Anspruch 1, **dadurch gekennzeichnet, dass** der elastische Ring (41; 41') und die Halteelemente (42; 42') so ausgelegt und angeordnet sind, dass der elastische Ring (41; 41') auf die Halteelemente (42; 42') eine Drehkraft von jeweils mindestens 250 N, insbesondere mehr als 400 N, ausübt.

3. Steckmuffenverbindung nach Anspruch 1 oder 2, **dadurch gekennzeichnet, dass** die dem Spitzende (21) zugewandte Seite der Halteelemente (42) jeweils ein Festkrallen am Aussenumfang des Spitzendes (21) ermöglichende Mittel, insbesondere Zähne (421), Vorsprünge, Spitzen oder Rauhigkeiten, aufweist.

4. Steckmuffenverbindung nach einem der Ansprüche 1 bis 3, **dadurch gekennzeichnet, dass** am Spitzende (21) eine Schweissraupe (5) angebracht ist, die den Kraftschluss vom Spitzende (21) auf den Haltering (4') ermöglicht.

5. Steckmuffenverbindung nach einem der Ansprüche 1 bis 4, **dadurch gekennzeichnet, dass** am Haltering (4) ein Dichtungslippenring (43) angeordnet ist, der den Spalt zwischen dem Spitzende (21) und der Muffe (11) schliesst.

6. Steckmuffenverbindung nach Anspruch 5, **dadurch gekennzeichnet, dass** sich der Dichtungslippenring (43) von den Halteelementen (42) aus über die Muffenstirnwand (113) hinaus erstreckt.

7. Steckmuffenverbindung nach einem der Ansprüche 1 bis 6, **dadurch gekennzeichnet, dass** der elastische Ring (41; 41') und die Halteelemente (42; 42') des Halterings (4; 4') in einer Halteringinnennut (111) in der Muffe (11) angeordnet sind, wobei die Halteringinnennut (111) zwischen dem elastischen Ring (41; 41') und den Halteelementen (42; 42') durch eine Ringwulst (112) unterteilt sein kann.

8. Steckmuffenverbindung nach einem der Ansprüche 1 bis 7, **dadurch gekennzeichnet, dass** die der Muffe (11) zugewandte Seite der Halteelemente (42; 42') ungefähr halbzylinderförmig ausgebildet ist und vorzugsweise in einem komplementären Teil der Muffe (11) gelagert ist.

9. Steckmuffenverbindung nach einem der Ansprüche 1 bis 8, **dadurch gekennzeichnet, dass** der elastische Ring (41; 41') und/oder der Dichtungslippenring (43) aus Gummi und/oder die Halteelemente (42; 42') aus Metall, insbesondere rostfreiem Stahl, sind.

10. Steckmuffenverbindung nach einem der Ansprüche 1 bis 8, **dadurch gekennzeichnet, dass** die Halteelemente (42; 42') aus einem nichtleitenden Material, insbesondere formstabilem Kunststoff oder Keramik, sind.

11. Steckmuffenverbindung nach einem der Ansprüche 1 bis 10, **dadurch gekennzeichnet, dass** der Haltering kein geschlossener Ring ist, sondern an einer Stelle unterbrochen ist.

12. Steckmuffenverbindung nach Anspruch 11, **dadurch gekennzeichnet, dass** der elastische Ring aus einem Längsprofil gebildet ist.

13. Haltering (4; 4') für eine Steckmuffenverbindung nach einem der Ansprüche 1 bis 12, mit einer Vielzahl von in Umfangsrichtung mit gegenseitigem Abstand angeordneten Halteelementen (42; 42'), einem elastischen Ring (41; 41') zum Ausüben einer Drehkraft auf die Halteelemente (42; 42') und einem Dichtungslippenring (43) zum Abdichten zwischen der Muffe (11) und dem Spitzende (21).

## Claims

1. Plug-in spigot and socket joint having two pipeline elements (1, 2), of which one has a spigot (21) and the other has an end with a socket (11) and the spigot (21) of one pipeline element (2) is plugged into the socket (11) of the other pipeline element (1), there being arranged in the socket (11) a sealing ring (3) and a retaining ring (4; 4'), which is formed separately from said sealing ring and has a multiplicity of retaining elements (42; 42') which are spaced apart from one another in the circumferential direction, **characterized in that** the retaining elements (42; 42') are arranged rotatably in the socket (11), and the retaining ring (4; 4') also has an essentially compressed elastic ring (41; 41') which subjects the retaining elements (42; 42') to a rotational force which forces permanently against the spigot (21) that side of the retaining elements (42; 42') which is directed towards the spigot (21).

2. Plug-in spigot and socket joint according to Claim 1, **characterized in that** the elastic ring (41; 41') and the retaining elements (42; 42') are designed and arranged such that the elastic ring (41; 41') subjects the retaining elements (42; 42') to a rotational force of in each case at least 250 N, in particular more than 400 N.

3. Plug-in spigot and socket joint according to Claim 1 or 2, **characterized in that** that side of the retaining elements (42) which is directed towards the spigot (21) has in each case a means which allows a firm grip on the outer circumference of the spigot (21), in particular teeth (421), protrusions, spikes or roughened areas.

4. Plug-in spigot and socket joint according to one of Claims 1 to 3, **characterized in that** a weld bead (5) is provided on the spigot (21), and this allows the force fit between the spigot (21) and the retaining ring (4').

5. Plug-in spigot and socket joint according to one of Claims 1 to 4, **characterized in that** arranged on the retaining ring (4) is a sealing-lip ring (43) which closes the gap between the spigot (21) and the socket (11).

6. Plug-in spigot and socket joint according to Claim 5, **characterized in that** the sealing-lip ring (43) extends beyond the end wall (113) of the socket from the retaining elements (42).

7. Plug-in spigot and socket joint according to one of Claims 1 to 6, **characterized in that** the elastic ring (41; 41') and the retaining elements (42; 42') of the retaining ring (4; 4') are arranged in a retaining-ring inner groove (111) in the socket (11), it being possible for the retaining-ring inner groove (111) to be subdivided by an annular bead (112) between the elastic ring (41; 41') and the retaining elements (42; 42').

8. Plug-in spigot and socket joint according to one of Claims 1 to 7, **characterized in that** that side of the retaining elements (42; 42') which is directed towards the socket (11) is of approximately semicylindrical design and is preferably mounted in a complementary part of the socket (11).

9. Plug-in spigot and socket joint according to one of Claims 1 to 8, **characterized in that** the elastic ring (41; 41') and/or the sealing-lip ring (43) are/is made of rubber and/or the retaining elements (42; 42') are made of metal, in particular stainless steel.

10. Plug-in spigot and socket joint according to one of Claims 1 to 8, **characterized in that** the retaining elements (42; 42') are made of a nonconductive material, in particular dimensionally stable plastic or ceramic material.

11. Plug-in spigot and socket joint according to one of Claims 1 to 10, **characterized in that** the retaining ring, rather than being a continuous ring, is interrupted at one location.

12. Plug-in spigot and socket joint according to Claim 11, **characterized in that** the elastic ring is formed from a longitudinal profile.

13. Retaining ring (4; 4') for a plug-in spigot and socket joint according to one of Claims 1 to 12, having a multiplicity of retaining elements (42; 42') which are spaced apart from one another in the circumferential direction, having an elastic ring (41; 41') for subjecting the retaining elements (42; 42') to a rotational force, and having a sealing-lip ring (43) for sealing between the socket (11) and the spigot (21).

## Revendications

1. Raccord à manchon à emboîtement comprenant deux éléments de conduite (1, 2) dont un est pourvu d'une extrémité effilée (21) et l'autre présente une extrémité pourvue d'un manchon (11), et l'extrémité effilée (21) de l'un des éléments de conduite (2) est emboîté dans le manchon (11) de l'autre élément de conduite (1), un anneau d'étanchéité (3) et une bague de maintien (4 ; 4') exécutée de manière séparée par rapport à celui-ci étant situés dans le manchon (11), laquelle bague de maintien (4 ; 4') est pourvue d'une pluralité d'éléments de retenue (42 ; 42') situés à distance les uns des autres dans la direction circonférentielle, **caractérisé en ce que** les éléments de retenue (42 ; 42') sont disposés dans le manchon (11) de manière à pouvoir tourner et la bague de maintien (4 ; 4') comprend, en outre, un anneau élastique (41 ; 41') essentiellement comprimé qui exerce sur les éléments de retenue (42 ; 42') une force de rotation qui appui en permanence contre l'extrémité effilée (21) le côté des éléments de retenue (42 ; 42') tourné vers l'extrémité effilée (21).

2. Raccord à manchon à emboîtement selon la revendication 1, **caractérisé en ce que** l'anneau élastique (41 ; 41') et les éléments de retenue (42 ; 42') sont conçus et disposés de manière à ce que l'anneau élastique (41 ; 41') exerce sur les éléments de retenue (42 ; 42') une force de rotation d'au moins 250 N à chaque fois, notamment supérieure à 400 N.

3. Raccord à manchon à emboîtement selon la revendication 1 ou 2, **caractérisé en ce que** le côté des éléments de retenue (42) tourné vers l'extrémité effilée (21) est pourvu à chaque fois d'un moyen permettant un accrochage solide sur la circonférence extérieure de l'extrémité effilée (21), notamment des dents (421), des saillies, des pointes ou des rugosités.

4. Raccord à manchon à emboîtement selon l'une des revendications 1 à 3, **caractérisé en ce que** l'extrémité effilée (21) présente une chenille de soudure (5) qui permet l'adhérence de l'extrémité effilée (21) sur la bague de maintien (4').

5. Raccord à manchon à emboîtement selon l'une des revendications 1 à 4, **caractérisé en ce qu'**un anneau à lèvre d'étanchéité (43) fermant la fente entre l'extrémité effilée (21) et le manchon (11) est situé sur la bague de maintien (4).

6. Raccord à manchon à emboîtement selon la revendication 5, **caractérisé en ce que** l'anneau à lèvre d'étanchéité (43), partant des éléments de retenue (42), s'étend au-delà de la paroi frontale (113) du manchon.

7. Raccord à manchon à emboîtement selon l'une des revendications 1 à 6, **caractérisé en ce que** l'anneau élastique (41 ; 41') et les éléments de retenue (42 ; 42') de la bague de maintien (4 ; 4') sont situés dans une gorge intérieure (111) pour la bague de maintien dans le manchon (11), la gorge intérieure (111) pour la bague de maintien pouvant être divisée par un bourrelet annulaire (112) entre l'anneau élastique (41 ; 41') et les éléments de retenue (42 ; 42').

8. Raccord à manchon à emboîtement selon l'une des revendications 1 à 7, **caractérisé en ce que** le côté des éléments de retenue (42 ; 42') tourné vers le manchon (11) est exécuté de manière à avoir approximativement la forme d'un demi-cylindre et est logé de préférence dans une partie complémentaire du manchon (11).

9. Raccord à manchon à emboîtement selon l'une des revendications 1 à 8, **caractérisé en ce que** l'anneau élastique (41 ; 41') et/ou l'anneau à lèvre d'étanchéité (43) est/sont en caoutchouc et/ou les éléments de retenue (42 ; 42') sont en métal, notamment en acier inoxydable.

10. Raccord à manchon à emboîtement selon l'une des revendications 1 à 8, **caractérisé en ce que** les éléments de retenue (42 ; 42') sont faits d'un matériau non conducteur, notamment d'une matière plastique ou d'une céramique indéformable.

11. Raccord à manchon à emboîtement selon l'une des revendications 1 à 10, **caractérisé en ce que** la bague de maintien n'est pas une bague fermée mais est interrompue à un endroit.

12. Raccord à manchon à emboîtement selon la revendication 11, **caractérisé en ce que** l'anneau élastique est formé d'un profilé longitudinal.

13. Bague de maintien (4 ; 4') pour un raccord à manchon à emboîtement selon l'une des revendications 1 à 12, comprenant une pluralité d'éléments de retenue (42 ; 42') situés à distance les uns des autres dans la direction circonférentielle, un anneau élastique (41 ; 41') servant à exercer une force de rotation sur les éléments de retenue (42 ; 42'), et un anneau à lèvre d'étanchéité (43) servant à l'étanchéification entre le manchon (11) et l'extrémité effilée (21).
